# EUROPEAN PATENT APPLICATION

(11) **EP 4 266 421 A1**
(43) Date of publication of application: **25.10.2023**
(21) Application number: 21911254.7
(22) Date of filing: 17.11.2021
(51) Int. Cl.: H01M 4/525, H01M 4/505, H01M 10/052, C01G 53/00

(54) **POSITIVE ELECTRODE ACTIVE MATERIAL FOR LITHIUM SECONDARY BATTERY AND METHOD FOR MANUFACTURING SAME, AND LITHIUM SECONDARY BATTERY**

(30) Priority: 21.12.2020 KR 20200179769
(71) Applicant: POSCO Holdings Inc., Seoul 06194 (KR); RESEARCH INSTITUTE OF INDUSTRIAL SCIENCE & TECHNOLOGY, Pohang-si, Gyeongsangbuk-do 37673 (KR); POSCO Chemical Co., Ltd, Gyeongsangbuk-do 37918 (KR)
(72) Inventor: PARK, Inchul, Incheon 22008 (KR); KIM, Hyungsub, Seoul 08826 (KR); LEE, Sanghyuk, Incheon 22405 (KR); SONG, Jung Hoon, Gwacheon-si, Gyeonggi-do 13835 (KR); KIM, Junghoon, Incheon 22003 (KR); NAM, Sang Cheol, Seoul 02587 (KR); CHOI, Kwon Young, Seoul 07987 (KR); KWON, Ohmin, Incheon 22018 (KR); SONG, Seok Hyun, Daejeon 34057 (KR)
(74) Representative: Potter Clarkson
(86) International application number: PCT/KR2021/016919
(87) International publication number: WO 2022/139187

(57) **Abstract**

It is related to a positive electrode active material for lithium secondary battery, comprising: a compound represented by Chemical Formula 1, wherein a molar content of lithium present in the structure of the positive electrode active material, measured through neutron diffraction analysis, is 1.01 to 1.15 for 1 mole of the positive electrode active material, a method of preparing it, and a lithium secondary battery including the same.

[Chemical Formula 1] Li₁₊ₐ(Ni_{b}M¹_{1-b})₁₋ₐO₂

In the Chemical Formula 1, 0<a<0.2, 0.8<b<1, M¹ is at least one element selected from Co, Mn, Al, Mg, Ca, Ti, V, Cr, Zr, Nb, Mo, and W.

## Description

### Field of the Invention

It is about a positive electrode active material for a lithium secondary battery, its manufacturing method, and a lithium secondary battery including it.

### Description of the Related Art

As the recent expansion in demand for electric vehicles, the demand for lithium secondary batteries to drive them is rapidly increasing. As the positive electrode active material of these lithium secondary batteries, layered lithium transition metal oxide (LiMO₂, M = Ni, Co, Mn, etc.) is mainly used, and high-capacity research is being actively conducted. Among existing layered positive electrode active materials, the materials with the highest capacity are LiNiO₂ and high-nickel-based layered positive electrode materials. But due to the instability of Ni(III), it is difficult to synthesize stoichiometric materials, and there is a problem that the electrochemical characteristics change greatly even with a small change in lithium in the synthesis process.

### SUMMARY OF THE INVENTION

We provide a lithium excess high nickel-based positive electrode active material with high price competitiveness, high stability and high energy density, its manufacturing method, and a lithium secondary battery including the same.

In one embodiment, it is provided a positive electrode active material for lithium secondary battery, comprising:
a compound represented by Chemical Formula 1,
wherein a molar content of lithium present in the structure of the positive electrode active material, measured through neutron diffraction analysis, is 1.01 to 1.15 for 1 mole of the positive electrode active material:

   [Chemical Formula 1] Li₁₊ₐ(Ni_{b}M¹_{1-b})₁₋ₐO₂

In the Chemical Formula 1, 0<a<0.2, 0.8<b<1, M¹ is at least one element selected from Co, Mn, Al, Mg, Ca, Ti, V, Cr, Zr, Nb, Mo, and W.

In other embodiment, it is provided a manufacturing method of positive electrode active material for lithium secondary battery:
mixing a positive electrode active material precursor containing a compound represented by Chemical Formula 11 and a lithium raw material at a molar ratio of 1: 1.03 to 1: 1.3, heating them in the temperature range of 680 °C to 780 °C:

   [Chemical Formula 11] Ni_{b11}M¹¹_{1-b11} (OH)₂
in the Chemical Formula 11, 0.8<b11<1, M¹¹ is at least one element selected from Co, Mn, Al, Mg, Ca, Ti, V, Cr, Zr, Nb, Mo, and W.

In another embodiment, it is provided a lithium secondary battery that includes a positive electrode containing the positive electrode active material, a negative electrode, a separator and an electrolyte.

A positive electrode active material and a lithium secondary battery including the same according to one embodiment implement high price competitiveness, high stability, high energy density, high-capacity and high cycle-life characteristics.

### BRIEF DESCRIPTION OF THE DRAWINGS

FIG 1 is a schematic diagram showing the chemical structure of lithium excess high nickel-based positive electrode active material.
FIG 2 is the X-ray diffraction pattern of the positive electrode active material of Comparative Example 1 to 6.
FIG 3 is an X-ray diffraction pattern of the positive electrode active material of exemplary embodiments 7 to 12.
FIG 4 is an X-ray diffraction pattern of the positive electrode active material of exemplary embodiments 1 to 6.
FIG 5 is a graph showing the contents of Li₂CO₃ and Li₂O remaining in the positive electrode active material of Comparative Example 1 to 6.
FIG 6 is a graph showing the contents of Li₂CO₃ and Li₂O remaining in the positive electrode active material of Examples 7 to 12.
FIG 7 is a graph showing the contents of Li₂CO₃ and Li₂O remaining in the positive electrode active material of Examples 1 to 6.
FIG 8 is a graph analyzing the nickel oxidation number of the positive electrode active material in Comparative Example 1 to 6.
FIG 9 is a graph analyzing the nickel oxidation number of the positive electrode active material of Examples 7 to 12.
FIG 10 is a graph analyzing the nickel oxidation number of the positive electrode active material of Example Embodiments 1 to 6.
FIG 11 is a graph analyzing the lithium content in the positive electrode active material structure of Example Embodiments 1 to 12 and Comparative Example 1 to 6.
FIG 12 is a graph analyzing cation mixing of the positive electrode active material of Example Embodiments 1 to 12 and Comparative Example 1 to 6.
FIG 13 is a graph showing the electrochemical characteristics of the cells of Comparative Example 1, 2, 4 and 6.
FIG 14 is a graph showing the electrochemical characteristics of the cells of exemplary embodiments 7, 8, 10 and 12.
FIG 15 is a graph showing the electrochemical characteristics of the cells of exemplary embodiments 1, 2, 4 and 6.
FIG 16 is a graph showing the cycle-life characteristics of the batteries of Comparative Example 1, 2, 4 and 6.
FIG 17 is a graph showing cycle-life characteristics of the batteries of exemplary embodiments 7, 8, 10 and 12.
FIG 18 is a graph showing cycle-life characteristics of the batteries of exemplary embodiments 1, 2, 4 and 6.

### DETAILED DESCRIPTION OF THE EMBODIMENTS

Hereinafter, specific implementations will be described in detail so that a person of an ordinary skill in this technical field can easily practice them. However, the present invention may be embodied in many different forms and is not limited to the embodiments described herein.

Terms used herein are only used to describe exemplary implementations and are not intended to limit the present invention. Expressions in the singular number include expressions of a plurality of unless the context clearly dictates otherwise.

Here, "combination thereof" means a mixture, laminate, composite, copolymer, alloy, blend, reaction product, etc. of constituents.

Terms such as "comprise", "include" or "having" are intended to designate the presence of embodied features, numbers, steps, elements, or combinations thereof. It should be understood that the presence or addition of one or more other features, numbers, steps, components, or combinations thereof is not precluded.

In order to clearly express the various layers and areas in the drawing, the thickness is enlarged and shown. Same reference numerals designate like elements throughout the specification. When any portion is referred to as being "above" or "on" another portion, any portion may be directly above or on another portion or be above or on another portion with the other portion interposed therebetween. In contrast, when any portion is referred to as being "directly on" another portion, the other portion is not interposed between any portion and another portion.

Also, "layer" here includes not only shapes formed on the entire surface when observed in plan view, but also shapes formed on some surfaces.

In addition, the average particle diameter can be measured by a method well known to a person of an ordinary skill in the art, and for example, it can be measured with a particle size analyzer, or it can be measured with a transmission electron micrograph or scanning electron microscope. As another method, the average particle diameter value can be obtained by measuring using the dynamic light scattering method, performing data analysis, counting the number of particles for each particle size range, and then calculating from this. Unless otherwise defined, the average particle diameter may mean the diameter D50 of particles whose cumulative volume is 50 volume% in the particle size distribution.

### Positive electrode active material

The positive electrode active material for a lithium secondary battery according to one embodiment is a lithium excess high nickel-based layered positive electrode active material including a compound represented by Chemical Formula 1 below.

[Chemical Formula 1] Li₁₊ₐ(Ni_{b}M¹_{1-b})₁₋ₐO₂

In the Chemical Formula 1, 0<a<0.2, 0.8<b<1, M¹ is at least one element selected from Co, Mn, Al, Mg, Ca, Ti, V, Cr, Zr, Nb, Mo, and W.

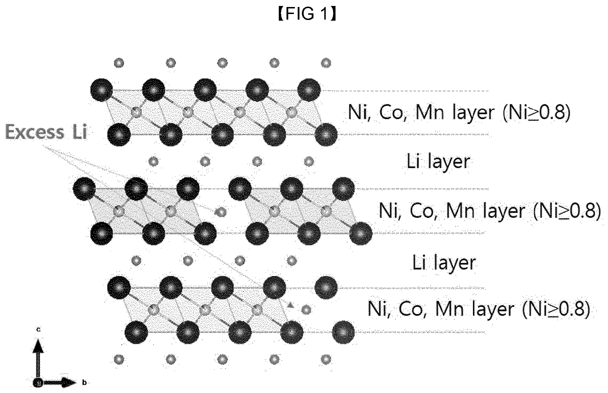

Here, lithium excess means that excess lithium enters the active material structure and some of the transition metal sites are occupied by lithium. FIG 1 is a picture showing the chemical structure of a positive electrode active material according to an embodiment, showing a structure in which excess lithium is contained in a portion of a transition metal site such as Ni, Co, and/or Mn. According to one embodiment, the molar content of lithium present in the structure of the positive electrode active material is 1.01 to 1.15 per 1 mole of the positive electrode active material. The molar content of the lithium can be determined, for example, by neutron diffraction analysis. The molar content of lithium present in the structure of the positive electrode active material can be expressed as 1.01 to 1.15 for 1 mol of the compound represented by the Chemical Formula 1. In the Chemical Formula 1, the range of a in (1+a) representing the content of lithium in the active material structure may be, for example, 0.005≤a≤0.19, 0.01≤a≤0.17, or 0.01≤a≤0.15.

In addition, the high nickel system means that the content of nickel in the active material is high. Specifically, it may mean that the content of nickel is greater than 80 mol% based on the total content of metals other than lithium. For example, the nickel content may be 81 mol% or more, 85 mol% or more, 89 mol% or more, 90 mol% or more, or 90 mol% or more. The b value representing the nickel content in the Chemical Formula 1 is, for example, 0.81≤b≤0.99, 0.83≤b≤0.99, 0.85≤b≤0.99, 0.87≤b≤0.99, 0.89≤b≤0.99, 0.90≤b≤0.99, 0.91≤b≤0.99, 0.92≤b≤0.99, or 0.81≤b≤0.98.

That is, the positive electrode active material according to one embodiment is a high nickel-based material in which the nickel content exceeds 80 mol%, and a lithium excess positive electrode active material in which 1.01 to 1.15 mol content of lithium enters the active material structure.

In general, high-nickel-based positive electrode active materials implement high-capacity. However, synthesis itself is difficult and it is difficult to secure structural stability. Even if it is synthesized, it is difficult to secure battery safety because the cation mixing phenomenon that Ni²⁺ ions occupy lithium sites increases and the capacity decreases. When lithium raw materials are added excessively during synthesis to lower the cation mixing and increase the capacity, lithium does not enter the active material structure and often remains in the form of impurities such as Li₂CO₃ or Li₂O. These impurities often reduce the capacity of the battery and cause stability problems.

Accordingly, the present inventors have found that the electrochemical characteristics of the lithium-excessive nickel-based layered positive electrode active material change greatly due to the subtle change in the composition of lithium and the change in the synthesis temperature. It was confirmed that a stable positive electrode active material with a very high nickel content and a certain amount of lithium entering the active material structure can be successfully synthesized when the synthesis is carried out in a specific temperature range within a specific lithium content range. In addition, it was confirmed that the cycle-life characteristics and stability of the battery were improved while the synthesized positive electrode active material realized high-capacity and high energy density.

In the positive electrode active material according to one embodiment, the cation mixing, which means the content of nickel in the lithium site, is less than 5 atomic%. In the case of a high nickel-based positive electrode active material in which the nickel content exceeds 80 mol%, there is a problem in that the capacity is reduced due to excessive cation mixing in which Ni²⁺ ions occupy lithium sites. On the other hand, in the positive electrode active material according to one embodiment, excess lithium occupied some of the transition metal sites, and the average oxidation number of the transition metal increased. As a result, cation mixing decreased. For example, the average oxidation number of nickel is increased by excess lithium, the formation of rock salt of the Ni(II)-O bond on the surface of the positive electrode active material is suppressed, and the elution of nickel is suppressed by reducing the cation mixing. The cation mixing may be, for example, less than 4.5 atomic %, less than 4.0 atomic %, or less than 3.5 atomic %. If the cation mixing satisfies the range, the positive electrode active material can realize sufficient capacity and secure battery stability.

The positive electrode active material has a very low content of impurities such as Li₂CO₃ and Li₂O remaining in the active material because lithium added in excess has successfully entered the active material structure. Specifically, the content of Li₂CO₃ present in the positive electrode active material may be less than 0.5 wt%, for example, less than 0.4 wt%. In addition, the content of Li₂O present in the positive electrode active material may be less than 1.0 wt%, for example, less than 0.8 wt% or less than 0.5 wt%. The contents of the Li₂CO₃ and Li₂O may be measured, for example, through X-ray diffraction analysis. When the content of impurities such as the Li₂CO₃ and Li₂O satisfies the range, it is proved that the lithium excess positive electrode active material structure was successfully synthesized. A positive electrode active material that satisfies this can exhibit excellent cell characteristics such as high cycle-life characteristics while implementing high-capacity.

For example, the Chemical Formula 1 may be specifically represented as Chemical Formula 2 below.

[Chemical Formula 2] L1₁₊ₐ₂ (Ni_{b2}Mn_{c2}M²_{1-b2-c2})₁₋ₐ₂O₂

In the Chemical Formula 2, 0<a2<0.2, 0.8<b2<1, 0<c2<0.2, 0≤1-b2-c2<0.2, M² is at least one element selected from Co, Al, Mg, Ca, Ti, V, Cr, Zr, Nb, Mo, and W. A positive electrode active material containing a compound represented by the Chemical Formula 2 can exhibit excellent cell characteristics such as high cycle-life characteristics while implementing high-capacity.

As another example, the Chemical Formula 1 may be specifically represented as Chemical Formula 3 below.

[Chemical Formula 3] Li₁₊ₐ₃ (Ni_{b3}Co_{c3}M³_{1-b3-c3})₁₋ₐ₃O₂

In the Chemical Formula 3, 0<a3<0.2, 0.8<b3<1, 0<c3<0.2, 0≤1-b3-c3<0.2, M³ is one or more elements selected from Mn, Al, Mg, Ca, Ti, V, Cr, Zr, Nb, Mo, and W. A positive electrode active material containing a compound represented by the Chemical Formula 3 can exhibit excellent cell characteristics such as high cycle-life characteristics while implementing high-capacity.

As another example, the Chemical Formula 1 may be specifically represented as Chemical Formula 4 below.

[Chemical Formula 4] Li₁₊ₐ₄ (Ni_{b4}Co_{c4}Mn_{d4}M⁴_{1-b4-c4-d4})₁₋ₐ₄O₂

In the Chemical Formula 4, 0<a4<0.2, 0.8<b4<1, 0<c4<0.1, 0<d4<0.1, 0≤1-b3-c3-d4<0.1, M⁴ is one or more elements selected from Al, Mg, Ca, Ti, V, Cr, Zr, Nb, Mo, and W. A positive electrode active material containing a compound represented by the Chemical Formula 4 can exhibit excellent battery characteristics such as high cycle-life characteristics while implementing high-capacity.

The average particle diameter of the positive electrode active material may be about 2 µm to 25 µm, for example, 5 µm to 25 µm, 10 µm to 25 µm, or 10 µm to 20 µm. If the average particle diameter of the positive electrode active material satisfies the range, it is possible to implement a positive electrode active material with high tap density and high energy density per volume.

The average particle diameter may be, for example, one analyzed by an optical microscope such as a scanning electron microscope, and may mean the diameter D50 of particles whose cumulative volume is 50 volume% in the particle size distribution.

### Manufacturing method of a positive electrode active material

One embodiment provides a manufacturing method of the positive electrode active material described above.

The manufacturing method of the positive electrode active material includes mixing the positive electrode active material precursor containing the compound represented by Chemical Formula 11 below and the lithium raw material at a molar ratio of 1: 1.03 to 1: 1.3 and heat treatment at a temperature range of 650 °C to 780 °C.

[Chemical Formula 11] Ni_{b11}M¹¹_{1-b11} (OH)₂

In the Chemical Formula 11, 0.8<b11<1, M¹¹ is at least one element selected from Co, Mn, Al, Mg, Ca, Ti, V, Cr, Zr, Nb, Mo, and W.

According to this manufacturing method, it is possible to successfully synthesize a layered positive electrode active material, which is a high nickel-based material with a nickel content of more than 80 mol% and contains an excess of lithium in the structure. The synthesized positive electrode active material can exhibit excellent cell characteristics such as high cycle-life characteristics while realizing high-capacity and high energy density.

The compound represented by the Chemical Formula 11 is a metal hydroxide containing nickel and is a precursor of the positive electrode active material. In the Chemical Formula 11, b11 represents the molar content of nickel relative to the entire metal content, for example, 0.81≤b11≤0.99, 0.83≤b11≤0.99, 0.85≤b11≤0.99, 0.87≤b11≤0.99, 0.89≤b11≤0.99, 0.90≤b11≤0.99, 0.9 1≤b11≤0.99, 0.92≤b11≤0.99, or 0.81≤b11≤0.98.

In synthesizing an excess lithium high nickel positive electrode active material, there is a characteristic that the success or failure of the synthesis is divided even with a slight change in the added lithium content, and the electrochemical characteristics of the synthesized active material change greatly. In one embodiment, the high nickel-based metal hydroxide precursor and the lithium source may be mixed in a molar ratio of 1:1.03 to 1:1.3 and heat-treated at a temperature range of 680 °C to 780 °C. From this, it was possible to successfully synthesize a lithium-rich high nickel-based positive electrode active material that implements high capacity while maintaining a stable structure. The mixing ratio of the metal hydroxide precursor and the lithium source may be, for example, 1: 1.03 to 1: 1.25, or 1: 1.03 to 1: 1.2. In addition, the heat treatment temperature may be, for example, 680 °C to 750 °C, 680 °C to 730 °C, 680 °C to 710 °C, 680 °C to 700 °C, or 690 °C to 780 °C, or 700 °C to 750 °C. When the mixing ratio of the metal hydroxide precursor and the lithium raw material satisfies the range, and the heat treatment temperature satisfies the range, the target lithium excess high nickel-based positive electrode active material can be successfully synthesized. That is, as a material in which the content of nickel exceeds 80 mol%, it is possible to successfully synthesize an excess lithium positive electrode active material in which the molar content of lithium present in the structure satisfies 1.01 to 1.15. The synthesized positive electrode active material can exhibit excellent cell characteristics such as high cycle-life characteristics while realizing high-capacity and high energy density.

The metal hydroxide, that is, the precursor of the positive electrode active material, can be prepared by a general co-precipitation method. For example, the precursor is a metal salt aqueous solution containing a nickel raw material such as a nickel salt, and an aqueous ammonia solution as a chelating agent and an alkaline aqueous solution such as NaOH for pH control are introduced into a co-precipitation reaction machine. It can be prepared by co-precipitation reaction while injecting N₂ to prevent oxidation.

The nickel salt may be nickel sulfate, nickel nitrate, nickel chloride, nickel fluoride or a combination thereof. The metal salt aqueous solution may further include a cobalt salt, a manganese salt, an aluminum salt, and the like in addition to a nickel salt. The cobalt salt may be, for example, cobalt sulfate, cobalt nitrate, cobalt chloride, cobalt fluoride, or a combination thereof. The manganese salt may be, for example, manganese sulfate, manganese nitrate, manganese chloride, manganese fluoride, or a combination thereof, and the aluminum salt may be, for example, aluminum sulfate, aluminum nitrate, aluminum chloride, aluminum fluoride, or a combination thereof.

The lithium raw material may include, for example, Li₂CO₃, LiOH, or a combination thereof.

### lithium secondary battery

In another exemplary embodiment, it provides a lithium secondary battery comprising:
a positive electrode including a positive electrode active material according to one embodiment of the present invention, a negative electrode including a negative electrode active material, and an electrolyte positioned between the positive electrode and the negative electrode.

### Positive electrode

The positive electrode includes a current collector and a layer of positive electrode active material positioned on the current collector. The positive electrode active material layer includes a positive electrode active material, and the positive electrode active material may include a positive electrode active material for a lithium secondary battery according to the above-described embodiment. In the positive electrode active material layer, the content of the positive electrode active material may be 90 wt% to 99 wt% with respect to the entire weight of the positive electrode active material layer.

The positive electrode active material layer may include a binder and a conductive material. In this case, the content of the binder and the conductive material may be 1 wt% to 5 wt%, respectively, with respect to the entire weight of the positive electrode active material layer.

The binder serves to attach the positive electrode active material particles well to each other and to attach the positive electrode active material to the current collector well. Representative examples of the binder include polyvinyl alcohol, carboxymethylcellulose, hydroxypropylcellulose, diacetylcellulose, polyvinylchloride, carboxylated polyvinylchloride, polyvinylfluoride, polymers containing ethylene oxide, polyvinylpyrrolydone, polyurethane, polytetrafluoroethylene, polyvinylidene fluoride, polyethylene, polypropylene, styrene-butadiene rubber, acrylated styrene-butadiene rubber, epoxy resin, nylon, etc. may be used, but are not limited thereto.

The conductive material is used to impart conductivity to the electrode, and any electronic conductive material can be used without causing chemical change in the battery to be configured. Examples of the conductive material include carbon-based materials such as natural graphite, artificial graphite, carbon black, acetylene black, ketchen black, and carbon fiber; metal-based materials such as metal powder or metal fibers such as copper, nickel, aluminum, and silver; conductive polymers such as polyphenylene derivatives; or a conductive material containing a mixture thereof.

As the current collector, aluminum foil, nickel foil, or a combination thereof may be used, but is not limited thereto.

### Negative electrode

The negative electrode may include a current collector and a negative active material layer formed on the current collector and including the negative active material according to an embodiment.

The negative active material includes a material capable of intercalating/deintercalating lithium ions reversibly, lithium metal, an alloy of lithium metal, a material capable of doping and undoping lithium, or a transition metal oxide.

A material that can intercalate/deintercalate the lithium ion reversibly is a carbon material, any generally-used carbon-based negative active material can be used in a lithium ion secondary battery, and typical examples thereof include crystalline carbon, amorphous carbon or combination thereof.

The alloy of the lithium metal is from the group consisting of lithium and Na, K, Rb, Cs, Fr, Be, Mg, Ca, Sr, Si, Sb, Pb, In, Zn, Ba, Ra, Ge, Al and Sn. Any alloy of selected metals may be used.

Materials capable of doping and undoping the lithium include Si, SiOx (0 < x < 2), Si-Y alloy (the Y is an element selected from the group consisting of an alkali metal, an alkaline earth metal, a group 13 element, a group 14 element, a transition metal, and a rare earth element and its combination thereof, but not Si), Sn, SnO₂, Sn-Y (the Y is an element selected from the group consisting of an alkali metal, an alkaline earth metal, a group 13 element, a group 14 element, a transition metal, a rare earth element and the combination thereof, not Sn), and the like.

Examples of the transition metal oxide include vanadium oxide and lithium vanadium oxide. The negative active material layer also includes a binder and may optionally further include a conductive material.

The binder serves to adhere the negative active material particles to each other well and to adhere the negative active material to the current collector well.

The conductive material is used to impart conductivity to the electrode, and any electronic conductive material can be used without causing chemical change in the battery.

As the current collector, one selected from the group consisting of copper foil, nickel foil, stainless steel foil, titanium foil, nickel foam, copper foam, a conductive metal-coated polymer substrate, and a combination thereof may be used.

The negative electrode is formed by mixing a negative active material, a binder and optionally a conductive material in a solvent to prepare an active material composition, and applying the active material composition to a current collector. Since such an electrode manufacturing method is widely known in the field, detailed description will be omitted in this specification. As the solvent, N-methylpyrrolidone and the like can be used, but is not limited thereto.

### Electrolyte

The electrolyte includes a non-aqueous organic solvent and a lithium salt.

The non-aqueous organic solvent serves as a medium through which ions involved in the electrochemical reaction of the battery can move.

The lithium salt is a material that dissolves in an organic solvent and acts as a supply source of lithium ion in the battery to enable basic operation of the lithium secondary battery and promotes the movement of lithium ion between the positive electrode and the negative electrode.

### Separator

Depending on the type of lithium secondary battery, a separator may exist between the positive electrode and the negative electrode. As such a separator, polyethylene, polypropylene, polyvinylidene fluoride or a multilayer of two or more of these may be used, and polyethylene/polypropylene 2-layer separator, polyethylene/polypropylene/polyethylene 3-layer separator, polypropylene/polyethylene/polypropylene 3-layer separator can be used. Lithium secondary batteries can be classified into lithium ion batteries, lithium ion polymer batteries and lithium polymer batteries according to the type of separator and electrolyte used, and can be classified into cylindrical, prismatic, coin-type, and pouch-type depending on the shape. It can be divided into bulk type and thin film type according to size. Since the structures and manufacturing methods of these batteries are well known in this field, detailed descriptions are omitted.

### DETAILED DESCRIPTION OF THE EMBODIMENTS

An exemplary embodiment and a Comparative Example will be described below. This is only an exemplary embodiment and the present invention is not limited to the following exemplary embodiment.

### Exemplary embodiment 1

### (1) Manufacture of positive electrode active material precursor

A positive electrode active material precursor having a composition of Ni_{0.92}Co_{0.04}Mn_{0.04}(OH)₂ is prepared by a general co-precipitation method. Specifically, a metal salt aqueous solution is prepared by dissolving NiSO₄·6H₂O, CoSO₄·7H₂O, and MnSO₄·H₂Oin distilled water. After preparing the co-precipitation reactor, N₂ is injected to prevent oxidation of metal ions during the co-precipitation reaction, and the temperature of the reactor is maintained at 50°C. NH₄(OH) is added as a chelating agent to the co-precipitation reaction, and NaOH is added for pH control. The precipitate obtained by the co-precipitation process is filtered, washed with distilled water, and then dried in an oven at 100 °C for 24 hours to prepare a positive electrode active material precursor having an average diameter of about 14.8 µm.

### (2) Manufacture of positive electrode active material

After mixing the prepared positive electrode active material precursor and LiOH·H₂O at a molar ratio of 1: 1.03, put it in a tube furnace and sinter while inflowing oxygen at 50 mL/min. After raising the temperature to 700°C at a speed of 10°C/min, maintain this temperature for 12 hours, then naturally cool the product to 25°C.

### (3) Manufacturing of batteries

92% of the manufactured positive electrode active material, 4% of Super P as a conductive material, and 4% of PVDF as a binder are put into an NMP solution, mixed to prepare a slurry, and then coated on an aluminum current collector to produce a positive electrode. Then, a coin half-cell with lithium metal as a negative electrode is manufactured.

### Exemplary Embodiment 2 to 12 and Comparative Example 1 to 6

In the manufacture of the positive electrode active material of exemplary embodiment 1, the precursor of the positive electrode active material, the positive electrode active material and the battery are manufactured in the same method, except that the mixing ratio of the positive electrode active material precursor and LiOH·H₂O and heat treatment temperature are changed as shown in Table 1 below.

**(Table 1)**

| | Molar ratio of lithium source to precursor | Temperature (°C) |
|---|---|---|
| exemplary embodiment 1 | 1.03 | 700 |
| exemplary embodiment 2 | 106 | 700 |
| exemplary embodiment 3 | 110 | 700 |
| exemplary embodiment 4 | 116 | 700 |
| exemplary embodiment 5 | 120 | 700 |
| exemplary embodiment 6 | 130 | 700 |
| exemplary embodiment 7 | 1.03 | 750 |
| exemplary embodiment 8 | 106 | 750 |
| exemplary embodiment 9 | 110 | 750 |
| exemplary embodiment 10 | 1.16 | 750 |
| exemplary embodiment 11 | 120 | 750 |
| exemplary embodiment 12 | 130 | 750 |
| Comparative Example 1 | 1.03 | 800 |
| Comparative Example 2 | 106 | 800 |
| Comparative Example 3 | 110 | 800 |
| Comparative Example 4 | 1.16 | 800 |
| Comparative Example 5 | 1.20 | 800 |
| Comparative Example 6 | 1.30 | 800 |

### Evaluation Example 1: X-ray diffraction pattern analysis

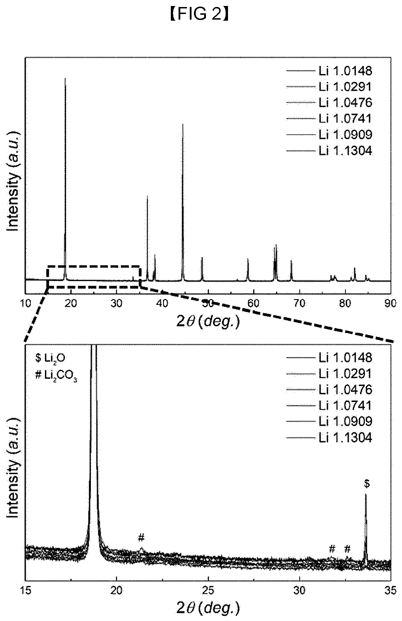

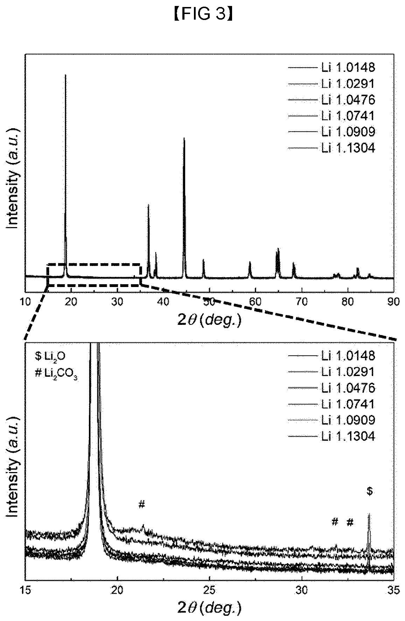

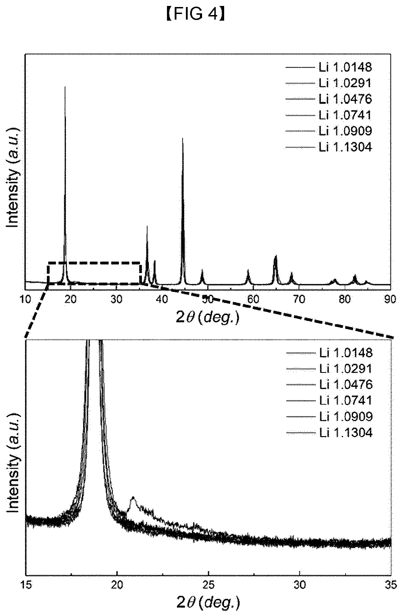

X-ray diffraction analysis was performed on the positive electrode active material prepared in Exemplary Embodiment 1 to 12 and Comparative Example 1 to 6, and the results are shown in FIG 2 to FIG 4. FIG 2 is the X-ray diffraction pattern of the active material of Comparative Example 1 to 6. FIG 3 is an X-ray diffraction pattern of the active material of exemplary embodiments 7 to 12. FIG 4 is an X-ray diffraction pattern of the active material of exemplary embodiments 1 to 6. In the X-ray diffraction patterns of FIG 2 to FIG 4, the broad peak near 21 degrees of the horizontal axis corresponds to the peak due to the C2/m phase. In the case of exemplary embodiments 1 to 12, it can be seen that as the content of lithium increases, a phase corresponding to the C2/m space group is gradually formed. Accordingly, it can be indirectly confirmed that excess lithium has penetrated into the active material. On the other hand, in Comparative Example 1 to 6, even if the content of lithium increases, it can be seen that lithium is not included in the active material structure.

### Evaluation Example 2: Content Analysis of Residual Impurities

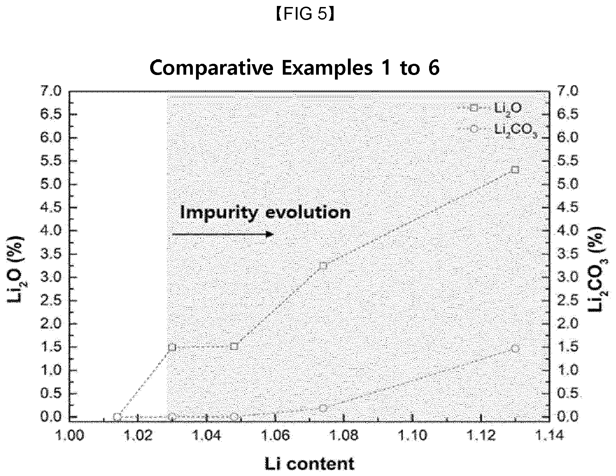

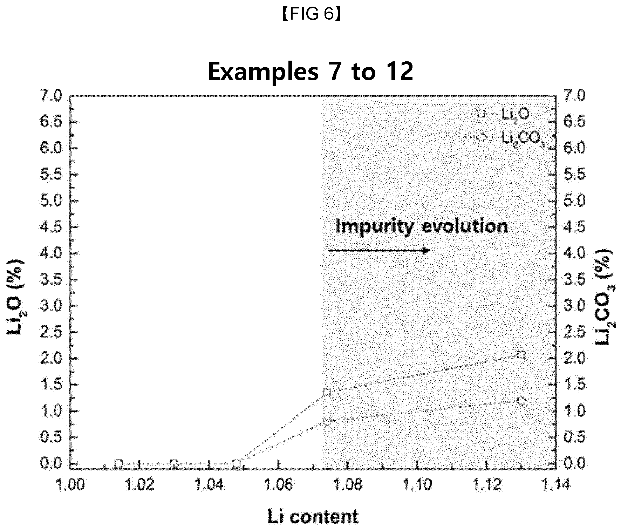

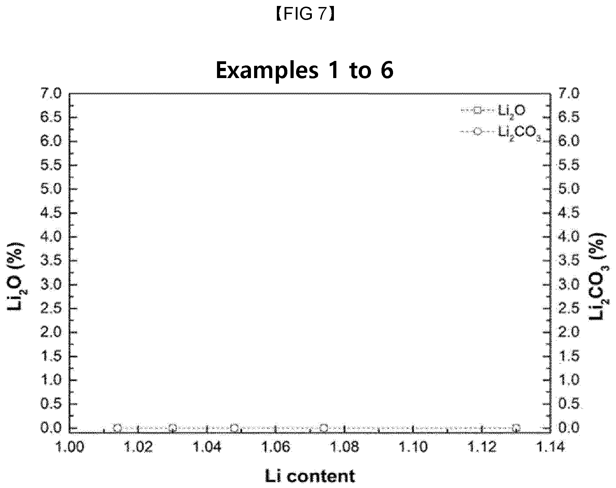

The content of residual impurities, Li₂CO₃ and Li₂O, was measured through Rietveld analysis using X-ray diffraction analysis on the positive electrode active material prepared in Example Embodiment 1 to 12 and Comparative Example 1 to 6. The impurity content for the positive electrode active material of Comparative Example 1 to 6 is shown in FIG 5. The impurity content of the positive electrode active material of exemplary embodiments 7 to 12 is shown in FIG 6. The impurity content of the positive electrode active material of exemplary embodiments 1 to 6 is shown in FIG 7. In FIG 5, in the case of Comparative Example 1 to 6, it can be confirmed that excess lithium does not enter the active material structure and remains in the form of impurities such as Li₂CO₃ and Li₂O. On the other hand, in the case of exemplary embodiments 7 to 12 in FIG. 6, the impurity content was greatly reduced, and in the case of exemplary embodiments 1 to 6 in FIG. 7, almost no impurities were present, indicating that excess lithium penetrated into the active material structure.

### Evaluation Example 3: Oxidation number analysis of nickel

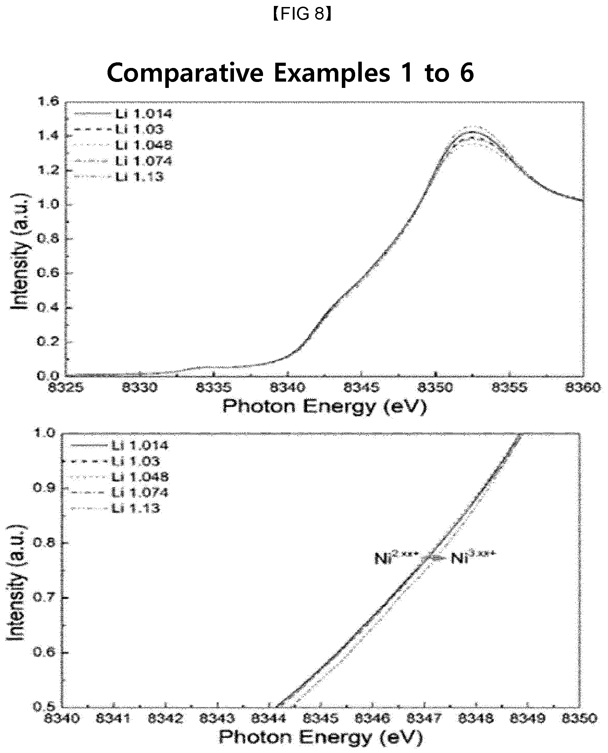

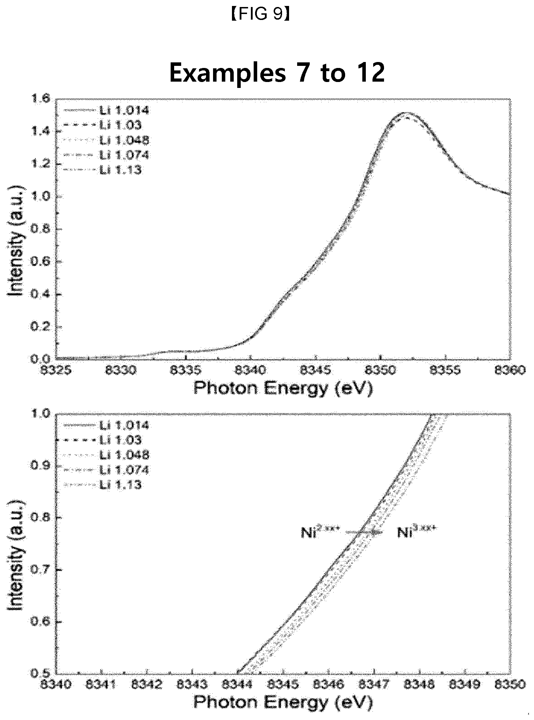

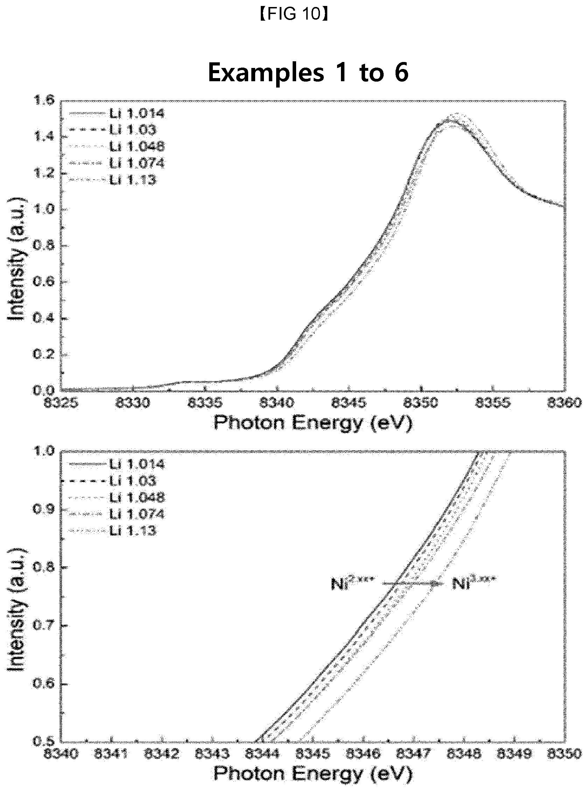

The oxidation number of nickel was analyzed through X-ray Absorption Near-Edge Structure (XANES) analysis of the positive electrode active material prepared in Example Embodiment 1 to 12 and Comparative Example 1 to 6. The oxidation number change of nickel for the positive electrode active material of Comparative Example 1 to 6 is shown in Fig. 8. The oxidation number change of nickel in the positive electrode active material of Example Embodiments 7 to 12 is shown in FIG 9. The oxidation number change of nickel for the positive electrode active material of exemplary embodiments 1 to 6 is shown in Fig. 10. In general, when lithium penetrates into the active material structure and a lithium excess structure is formed, lithium takes the place of the transition metal, and the oxidation number of the remaining transition metal increases. Referring to FIG 8 to 10, in the case of Comparative Example 1 to 6, the oxidation number of nickel is hardly changed as the content of lithium increases. In the case of exemplary embodiments 1 to 12, it can be confirmed that the oxidation number of nickel increases as the content of lithium increases. Accordingly, it can be confirmed that the excess lithium successfully enters the active material structure and the desired positive electrode active material is smoothly synthesized.

### Evaluation Example 4: Analysis of lithium content in the structure of positive electrode active material through neutron diffraction analysis

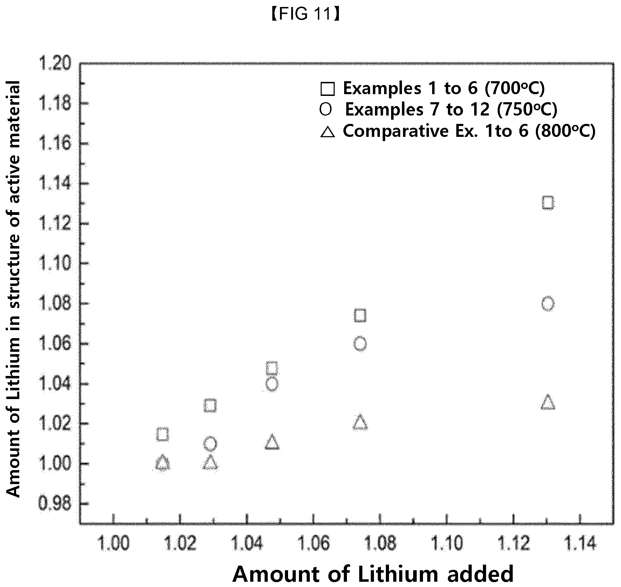

Neutron diffraction analysis was performed on the positive electrode active material prepared in Exemplary Embodiment 1 to 12 and Comparative Example 1 to 6 using a HANARO reactor of the Korea Atomic Energy Research Institute. Using this, Rietveld refinement was performed, and through this, the lithium content in the positive electrode active material structure was analyzed. The result is shown in FIG 11. Referring to FIG. 11, in the case of exemplary embodiments 1 to 12, it can be confirmed that the molar content of lithium in the active material structure ranges from 1.01 to 1.15 with respect to 1 mole of the active material. Compared to the Comparative Example, it can be confirmed once again that the lithium enters the active material structure more easily.

### Evaluation Example 5: Cation mixing analysis

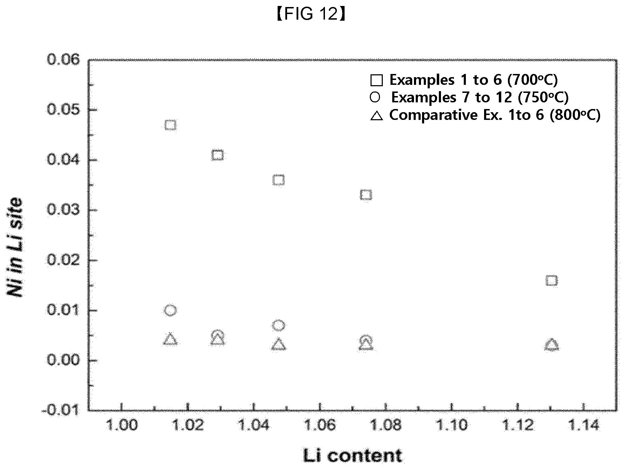

Rietveld analysis using neutron diffraction analysis was performed on the positive electrode active material prepared in Exemplary Embodiment 1 to 12 and Comparative Example 1 to 6. The ratio occupied by nickel in the lithium site, that is, cation mixing was analyzed, and the result is shown in FIG. 12. Referring to the graphs of exemplary embodiments 1 to 6 in FIG. 12, as the content of lithium increases and the excess lithium entering the active material structure increases, the oxidation number of the transition metal increases, and accordingly, it can be seen that cation mixing decreases. In addition, it can be confirmed that the cation mixing of the positive electrode active materials of Examples 1 to 12 is less than 5 atom%. Compared to Comparative Examples 1 to 6, the reason why cation mixing in exemplary embodiments 1 to 12 is higher is that the synthesis temperature is relatively lowered in exemplary embodiments 1 to 12 than in Comparative Examples, so it is confirmed that more cation mixing occurs.

### Evaluation Example 6: electrochemical characteristics of battery at high voltage

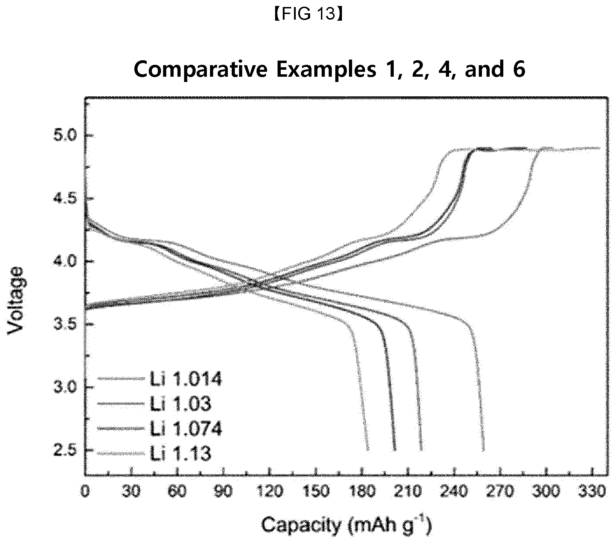

The half-cell prepared in Example Embodiment 1 to 12 and Comparative Example 1 to 6 was charged with cut-off at 4.9 V. The electrochemical characteristics of the cells of Comparative Example 1, 2, 4 and 6 are shown in FIG. 13. The electrochemical characteristics of the cells of exemplary embodiments 7, 8, 10 and 12 are shown in FIG. The electrochemical characteristics of the cells of exemplary embodiments 1, 2, 4 and 6 are shown in FIG.

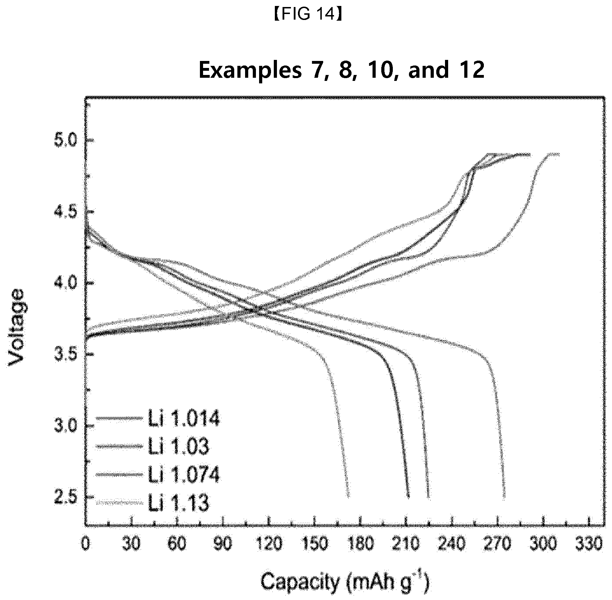

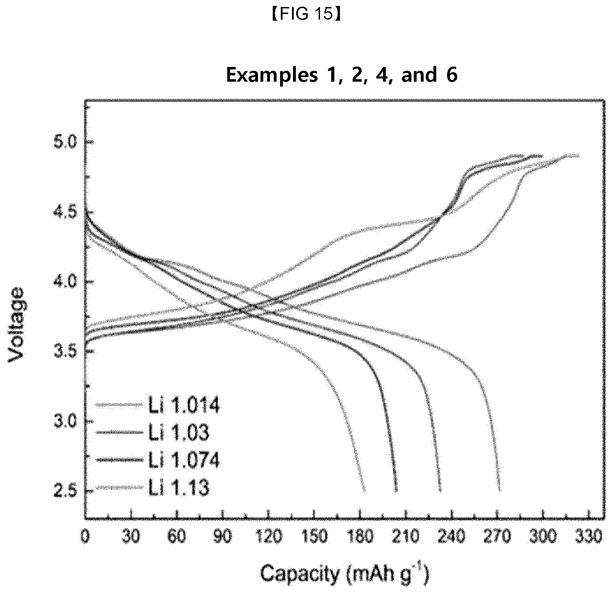

In general, it is known that an oxidation/reduction reaction of oxygen occurs at a high voltage in the case of a lithium-excess material, that is, an active material in which excess lithium is contained in the active material structure. In the case of the batteries of exemplary embodiments 1 to 12 shown in FIG. 14 and FIG. 15, it can be confirmed that a non-reversible reaction occurred in the 4.6 V in the first charge, and this reaction is generally known as an oxidation/reduction reaction of oxygen. Therefore, in Example Embodiments 1 to 12, it can be confirmed once again that the desired lithium excess positive electrode active material is smoothly synthesized.

### Evaluation Example 7: Evaluation of cycle-life characteristics of batteries

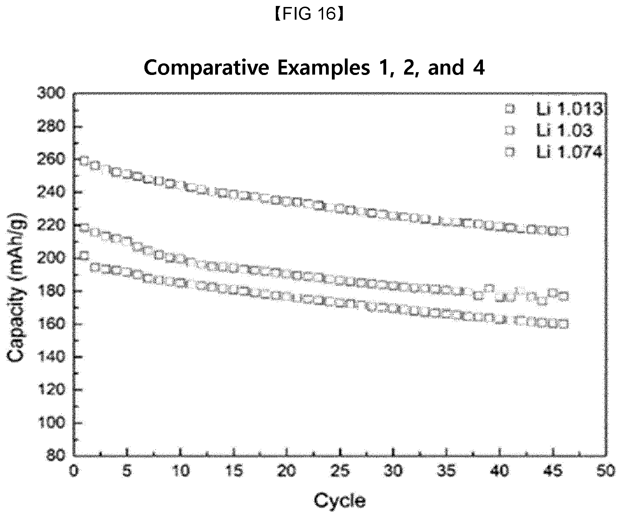

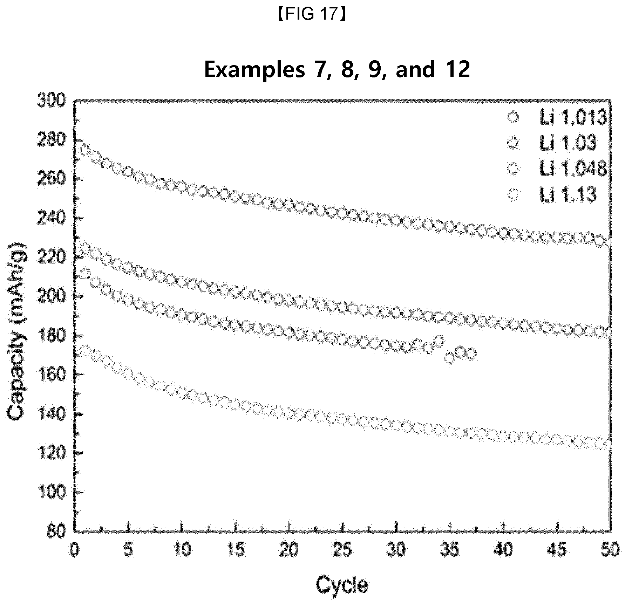

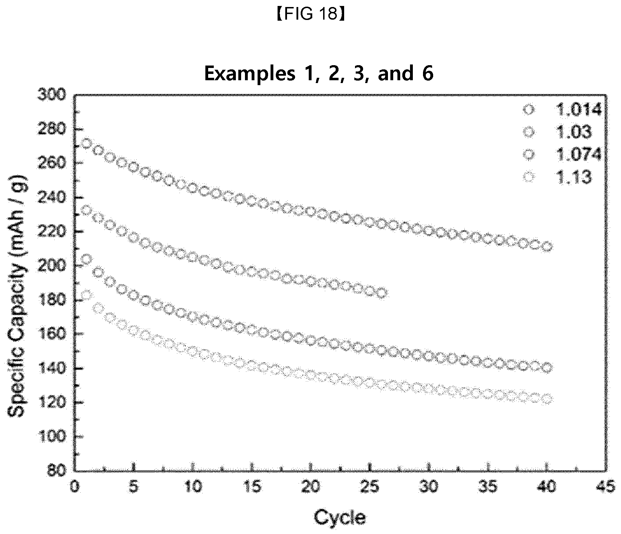

The cycle-life characteristics of the batteries manufactured in Exemplary Embodiment 1 to 12 and Comparative Example 1 to 6 were evaluated by charging and discharging up to about 50 cycles. The cycle-life characteristics of the cells of Comparative Example 1, 2, 4 and 6 are shown in FIG. 16. The cycle-life characteristics of the batteries of exemplary embodiments 7, 8, 9 and 12 are shown in FIG. The cycle-life characteristics of the cells of exemplary embodiments 1, 2, 3 and 6 are shown in FIG. 18. Referring to FIG 16 to FIG 18, it can be confirmed that the batteries of the exemplary embodiments implement high-capacity and high cycle-life characteristics.

Although the preferred exemplary embodiments have been described in detail, the range of rights of the present invention is not limited thereto, and various modifications and improved forms of a person of an ordinary skill in the art using the basic concept defined in the following claims range are also included in the range of rights of the present invention.

## Claims

1. A positive electrode active material for lithium secondary battery, comprising:
a compound represented by Chemical Formula 1,
wherein a molar content of lithium present in the structure of the positive electrode active material, measured through neutron diffraction analysis, is 1.01 to 1.15 for 1 mole of the positive electrode active material:
[Chemical Formula 1] Li₁₊ₐ(Ni_{b}M¹_{1-b})₁₋ₐO₂
in the Chemical Formula 1, 0<a<0.2, 0.8<b<1, M¹ is at least one element selected from Co, Mn, Al, Mg, Ca, Ti, V, Cr, Zr, Nb, Mo, and W.

2. The positive electrode active material of claim 1, wherein:
in the positive electrode active material, the content of nickel in the lithium site is less than 5 atomic percent.

3. The positive electrode active material of claim 1, wherein:
as measured by X-ray diffraction analysis, the content of Li₂CO₃ present in the positive electrode active material is less than 0.5 wt%.

4. The positive electrode active material of claim 1, wherein:
as measured by X-ray diffraction analysis, the content of Li₂O present in the positive electrode active material is less than 1.0 wt%.

5. The positive electrode active material of claim 1, wherein:
b is 0.85<b<1 in the Chemical Formula 1.

6. The positive electrode active material of claim 1, wherein:
b is 0.90<b<1 in the Chemical Formula 1.

7. A manufacturing method of positive electrode active material for lithium secondary battery:
mixing a positive electrode active material precursor containing a compound represented by Chemical Formula 11 and a lithium raw material at a molar ratio of 1: 1.03 to 1: 1.3,
heating them in the temperature range of 680 °C to 780 °C:
[Chemical Formula 11] Ni_{b11}M¹¹_{1-b11} (OH)₂
in the Chemical Formula 11, 0.8<b11<1, M¹¹ is at least one element selected from Co, Mn, Al, Mg, Ca, Ti, V, Cr, Zr, Nb, Mo, and W.

8. The method of claim 7, wherein:
the precursor containing the compound represented by Chemical Formula 11 and the lithium raw material are mixed at a molar ratio of 1: 1.03 to 1: 1.25.

9. The method of claim 7, wherein:
heat treatment of a mixture of a precursor containing a compound represented by Chemical Formula 11 and a raw material of lithium in a temperature range of 700 °C to 750 °C.

10. The method of claim 7, wherein:
the heat treatment maintains for 5 to 20 hours.

11. A lithium secondary battery, comprising:
a positive electrode comprising a positive electrode active material according to any one of claim 1 to claim 6,
a negative electrode,
a separator positioned between the positive electrode and the negative electrode, and
an electrolyte.
